# EUROPEAN PATENT SPECIFICATION

(11) **EP 2 477 910 B1**
(45) Date of publication and mention of the grant of the patent: **24.08.2016**
(21) Application number: 10817959.9
(22) Date of filing: 20.09.2010
(51) Int. Cl.: B65D 85/00, B65D 75/30, B65D 33/25

(54) **PACKAGING FOR GUMMY SUBSTRATUM**
VERPACKUNG FÜR EIN HARZIGES SUBSTRAT
EMBALLAGE POUR SUBSTRATUM GOMMEUX

(30) Priority: 30.03.2010 US 319124 P; 18.09.2009 US 276993 P
(43) Date of publication of application: 25.07.2012
(73) Proprietor: Cao Group, Inc., West Jordan, Utah 84084 (US)
(72) Inventor: JENSEN, Steven, D., South Jordan, UT 84095 (US); CAO, Densen, Sandy, UT 84093 (US)
(74) Representative: Leppard, Andrew John
(86) International application number: PCT/US2010/049447
(87) International publication number: WO 2011/035223

(56) References cited:
- EP-A1- 1 995 177
- US-A- 5 014 856
- US-A1- 2004 146 222
- US-A1- 2004 146 222
- US-A1- 2007 298 380
- US-A1- 2008 063 325
- US-A1- 2008 063 325

## Description

### TECHNICAL FIELD OF THE INVENTION

The present disclosure generally relates to packaging, and particularly to packaging of items having a sticky or tacky surface on at least a portion of a surface of the item.

### CROSS-REFERENCE TO RELATD APPLICATIONS

### BACKGROUND OF THE INVENTION

Many items and products that are manufactured today are packaged for shipment to various commercial destinations. In fact, most products sold in today's economy are at one time or another packaged during the various stages of manufacturing, handling or shipping. Although there are various reasons for packaging a product (e.g., customer recognition or marketing) a primary purpose of a package is to protect the contents of the package during the handling and shipping process until the package is eventually opened by the end-user. Therefore, manufacturers often design packages to allow a particular product to arrive to the end-user in essentially the same condition as the product left the manufacturer.

Accordingly, packaging plays an important role for manufacturers of products to provide end-users with a quality product. Due to the importance of packaging, a manufacturer may scrutinize each individual item to determine the best and most efficient way to ship the item. Packaging and shipping expenses may be a costly and resource intensive portion of a manufacturer's production process. Any improvements in the packaging characteristics of an item that reduces the number of packages, the size of the package, and/or the time associated with packaging the item may greatly decreases the overall production cost of that particular item. Therefore, reducing packaging and shipping costs may be beneficial to a manufacturer, allowing for either increased profit or a more competitive price of the item in the market.

The successful packaging of varying types of items may present a varying set of packaging challenges, depending on the characteristics of the items to be packaged. For example, the following list represents various item categories and generally illustrates that the characteristics of an item to be packaged may be associated with the characteristics of the packaging of that item. Some example item categories may include:
1. Non-fragile solids - non-fragile solid items may be packaged in a plastic wrap or bag, and then placed in a box with standard cushioning material;
2. Fragile solids - fragile solid items may be packaged in a plastic wrap or bag, and then placed in a box with maximum amount of cushioning material;
3. Liquids - liquids may be packaged in a shatter-resistant container that is covered by a plastic wrap or bag; and
4. Gases - gases may be packaged in a metal puncture resistant cylinder that is covered in plastic wrap or a bag.

Notwithstanding the above general categories, some specialty items are much more difficult to package and ship, which often leads to customized packaging to allow adequate delivery of the specialty items to the end-user.

One example of specialty items that pose a packaging challenge may include substances and/or compounds that are gummy or sticky. Items that are gummy or sticky have an inherent property of adhering to items with which they come into contact. In particular, gummy or sticky items may adhere to conventional packaging or wrappers and, in most cases, make it nearly impossible to separate the item from the packaging. Thus, gummy or sticky items require customized packaging in order to successfully provide the gummy or sticky item to the end user.

Various strategies have been developed to manage the problems associated with packaging gummy or sticky items. Some convention strategies in packaging gummy or sticky items include:
1. No-stick wrapper - A no-stick wrapper may be a single component material designed at the molecular level to minimize adhesion between the gummy item and the wrapper. Examples of suitable no-stick wrapper materials include fluorinated or chlorinated polymers such as Teflon, polymeric silicone or PVC. Other materials could include solid waxes, such as paraffin.
2. Release Agents - Conventionally, release agents are compounds that are applied onto the packaging that minimizes adhesion between the gummy or sticky item and the packaging. Examples of release agents include waxes, such as those found coated onto wax paper. Other release agents could include oils, such as silicone or vegetable oils. Traditionally, oils may be applied on a polymeric or paper sheet.

Currently, there are various gummy or sticky items that are commercially available that utilize the various packaging techniques to package a gummy or sticky item. For example, a FRUIT ROLL-UP utilizes a type of no-stick wrapper. In particular, a FRUIT ROLL-UP is made of a thin sticky layer of a fruit laden confection that is applied to a sheet of cellophane. After application, the sheet of cellophane is rolled up such that both the front and back of the cellophane act as a continuous wrapper.

Although the packaging of the FRUIT ROLL-UP may protect both sides of the sticky fruit laden confection, this type of packaging has several disadvantages. One example drawback is that the ease of separating the confection depends on which side of the cellophane the confection releases first. Ideally the fruit laden confection releases on the leading end of the cellophane causing the roll to unravel and provide access to the FRUIT ROLL-UP. Often times, however, the fruit laden confection will stay stuck to the body of the roll causing the end-user to have to tediously and carefully peel away the confection. Furthermore, during the tedious peeling away process, the FRUIT ROLL-UP will often tear, causing the unpacking process to become increasingly more difficult and frustrating for the end-user.

Another disadvantage of a FRUIT ROLL-UP type wrapper is that it requires an additional package to environmentally seal the FRUIT ROLL-UP. In particular, a FRUIT ROLL-UP requires a no-stick wrapper to manage the sticky confection, and requires an additional package to environmentally seal the FRUIT ROLL-UP. Without the use of an additional package, the no-stick wrapper may fail to seal the FRUIT ROLL-UP, causing the FRUIT ROLL-UP to dry out and/or become contaminated.

An example of using a release agent in the packaging of gummy or sticky items is the packaging of salt-water taffy. The conventional wrapper for salt-water taffy is wax paper. The wax serves as a releasing agent because the wax is inherently harder to adhere to than paper. One disadvantage to using a release agent like wax is that the wax may release onto the candy and be ingested by the end user. Another disadvantage to the packaging design of saltwater taffy is that it is not individually environmentally sealed.

A third example of packaging a gummy or sticky item is dental whitening strips, such as CREST WHITESTRIPS. CREST WHITESTRIPS essentially consist of a plastic backing material layered with a coat of whitening gel that has a sticky characteristic. In order to protect the whitening gel, a release liner is used to cover the whitening gel. Thus, the whitening gel is positioned between a backing material and a release liner. The whitening gel is then placed within an additional package to protect the whitening gel from the environment, thus preventing the whitening gel from drying out or becoming contaminated.

One disadvantage to conventional packaging for whitening gels, as described above, is that if whitening gel is packaged without a release liner, then the whitening gel causes a mess and will not arrive to the end-user in a useable form. On the other hand, by using a release liner, an additional manufacturing step, as well as additional packaging material, is added to the packaging of the whitening gel, causing the cost to package and ship the whitening gel to increase. Moreover, a release liner does not seal out the sides of the whitening gel, and therefore a second environment package must be used, again causing the cost of packaging and shipping to increase.

US 2008/0063325 A1 discloses peel-to-open packages. The packages are made of substrate layers removably adhered together using an adhesive pattern of seals that are characterised by peel forces. US 2007/0298380 A1 discloses dental treatment devices in the shape of a dental strip which includes a barrier layer, a dental treatment composition and an adhesive composition near a lingual rim of the barrier layer.

Accordingly, there are a number of disadvantages in the conventional art of packaging gummy or sticky substances.

### SUMMARY OF THE INVENTION

According to aspects of the present invention, there is provided a packaging system as claimed in claim 1 and a method as claimed in claim 10.

Implementations of the present invention include methods, devices, and systems that provide effective packaging items with at least one gummy surface. In particular, implementations of the present invention provide a package for items with a gummy surface that does not require a separate liner to be placed on the gummy surface. In example implementations, the package includes inadhesive polymers such that the item can be removeably adhered to a portion of the package.

Additional features and advantages of the invention will be set forth in the description which follows, and in part will be obvious from the description, or may be learned by the practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth hereinafter.

### BRIEF DESCRIPTION OF THE DRAWINGS

In order to describe the manner in which the above-recited and other advantages and features of the invention can be obtained, a more particular description of the invention briefly described above will be rendered by reference to specific example implementations thereof which are illustrated in the appended drawings. Understanding that these drawings depict only typical implementations of the invention and are not therefore to be considered to be limiting of its scope, the invention will be described and explained with additional specificity and detail through the use of the accompanying drawings in which:
Figure 1A illustrates an exploded view of a package;
Figure 1B illustrates an assembled view of the package of Figure 1A;
Figure 2A illustrates another example embodiment of a package;
Figure 2B illustrates an elevated side view of the package of Figure 2A;
Figure 2C illustrates a user beginning to open the package of Figure 2A;
Figure 2D illustrate a user at a mid-point of opening the package of Figure 2A;
Figure 2E illustrates a user accessing the gummy item after opening the package of Figure 2A; and
Figure 3 illustrates an example method of packaging a gummy item according to principles described herein.

### DETAILED DESCRIPTION OF THE INVENTION

Implementations of the present invention include methods, devices, and systems that provide effective packaging items with at least one gummy surface. In particular, implementations of the present invention provide a package for items with a gummy surface that does not require a separate liner to be placed on the gummy surface. In example implementations, the package includes inadhesive polymers such that the item can be removeably adhered to a portion of the package.

As will be appreciated more fully herein, implementations of the present invention provide an effective package for items having at least one gummy surface. In particular, example embodiments of the invention provide an environmentally sealed package that does not allow the gummy surface of the item to dry out. Moreover, due to the sealed package, the item is protected from any contamination outside the package.

Additionally, example embodiments of the present invention allow an end-user to easily open the package. Once opened, the package provides the user with easy access to the item with the gummy surface. Thus, although the item is gummy and sticky, the package allows an end-user to easily access the item for use without necessarily having to interfere with the gummy surface of the item.

Also, example embodiments of the present invention provide a cost effective and time efficient method of packaging items having at least one gummy surface. For example, the item with the gummy surface may be placed within the package without having a release liner, or similar device. Thus, the present invention provides a package that requires less material and less time to package, which in turn reduces expenses.

As an overview, the packaging of the present invention may use a variety of polymers and materials that are substantially nonadhesive by nature. Materials such as fluoro-polymers, chloro-polymers, silicone-polymers, and long chained alkane type polymers are preferred. Polymers such as PTFE, polyethylene, polypropylene, PFA, FEP, ETFE, PVDF, ETFE, ECTFE, PCTFE, FFKM, PFPE, polysiloxanes and any like polymers are further within the scope of this invention. Preferred polymers are also chosen among the group that is most amenable to blow, vacuum or injection molding such that the manufacturing of the package is most efficient.

In addition the various materials with which the packaging can be made, the packaging can be configured to have any geometric dimension and configuration. As will be discussed further below, exemplary embodiments of the invention are directed toward packaging one or more treatment strips (e.g., dental treatment strips). Accordingly, the packaging described and illustrated below includes a substantially flat rectangular geometric configuration having dimensions that correspond to the relative dimensions of the dental treatment strips. However, the invention is not limited to these geometric configurations as the packaging can include almost any geometric configuration necessary for a particular item to be packaged.

Moreover, example embodiments of the present invention are not limited to packaging treatment strips. Rather, example embodiments of the present invention may be used to package almost any item that includes at least one gummy surface. For the purposes of this application, a gummy surface is a surface that includes one or more of the following properties: sticky, gel-like, jelly-like, gluey, and/or includes any adhesive characteristics.

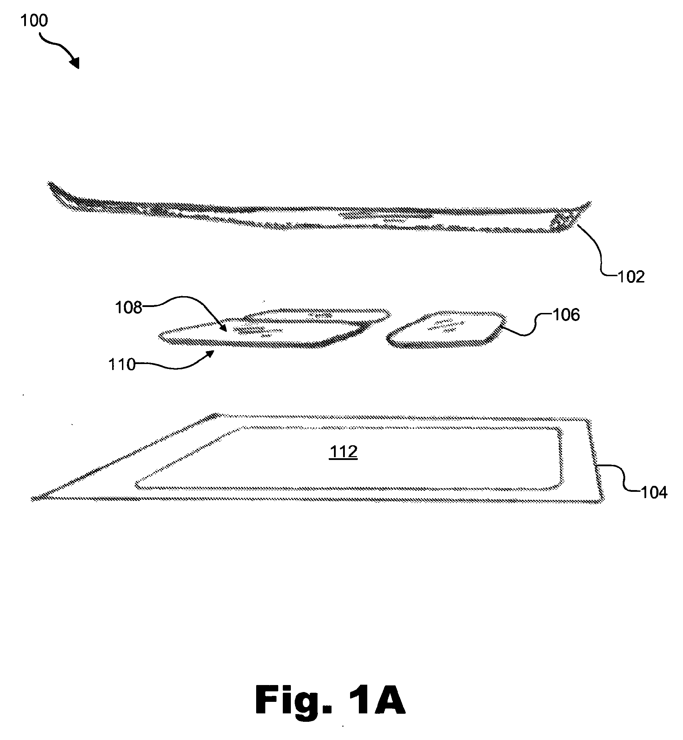

Referring now to Figure 1A, an exploded view of an example package 100 is shown. Package 100 can include a first sheet 102 (e.g. top sheet) and a second sheet 104 (e.g. bottom sheet). In one example, the first sheet 102 is a plastic sheet and second sheet 104 is a paper sheet. In alternative implementations, both the first sheet 102 and the second sheet 104 may be made from plastic. Moreover, any of the above mentioned materials, or similar materials, may be used as the first sheet 102 and the second sheet 104 material.

Notwithstanding their material, the first sheet 102 and the second sheet 104 may include a defined storage area 112 as shown on the second sheet 104 in Figure 1A (the first sheet has a corresponding defined storage area). The defined storage area 112 is the defined area where an item will be stored. Accordingly, the first sheet 102 and the second sheet 104 have substantially the same dimensions and shape. In this manner, the first sheet 102 and the second sheet 104 can be coupled together to form an enclosed space between the first sheet 102 and the second sheet 104 around the defined area 112.

For example, and as illustrated in Figure 1A, treatment strips 106 can be placed in the defined area 112 to be packaged. Treatment strips 106 may have various properties and characteristics. In one embodiment, the treatments strips 106 comprise a gummy surface 108 and backing material 110. The gummy surface 108 is sticky and includes adhesive properties, while the backing material 110 does not easily adhere to other surfaces. It is noteworthy that the treatment strip 106 is not attached to, nor does it include, a separate release liner. Rather, and as will be explained further below, the actual package 100 interfaces with the gummy surface 108 of the treatment strips.

In order to package the treatment strips 106, the gummy surface 108 of the treatment strip 106 is placed against the first sheet 102, while the backing material 110 of the treatment strips 106 are placed against the second sheet 104 of the package 100. For example, Figure IB illustrates the package 100 assembled such that the treatment strips 106 are enclosed within the enclosed space in the defined area 112. As illustrated in Figure IB, the gummy surface 108 of the treatment strips interfaces with the first sheet 102 such that the treatment strips 106 are held in place during shipping and handling.

In order to further secure the treatment strips 106 within the package 100, the package 100 can include an outer seam 114, whereby the first sheet 102 and the second sheet 104 are sealed together, thereby environmentally sealing the treatment strips 106 within the packaging system 100. In one example, the outer seam 114 is heat-sealed forming a releasable bond between the first sheet 102 and the second sheet 104. Other methods of sealing the first sheet 102 to the second sheet 104 may also be used (e.g., using a chemical adhesive).

Once the treatment strips 106 are packaged within the package 100, an end-user can easily open the package 100 and gain access to the treatment strips 106. For example, and as illustrated in Figure IB, one or more corners 1 16 of the package 100 can be left unsealed such that a user can separate the first sheet 102 from the second sheet 104 at the position of the corner 116. Upon separating the first sheet 102 from the second sheet 104 at the corner 1 16, a user may peel apart the first sheet 102 from the second sheet 104, thereby exposing the treatment strips 106.

Once the first sheet 102 and the second sheet 104 are separated, the treatment strips 106 will remain adhered to the first sheet 104, while the backing material 110 allows the treatment strips 106 to cleanly release from the second sheet 104. At this point, a user simply has to peel the treatment strips 106 off the first sheet 102. For example, the gummy surface 108 may have less adhesion to the first sheet 102 than to the backing material, thus allowing the gummy surface 108 to release from the first sheet 102 before releasing from the backing material 110.

In an alternative example, the treatment strip 106 can include two gummy surfaces (e.g., not include backing material 110) such that the treatment strip adheres to both the first sheet 102 and the second sheet 104. In this example, the first sheet 102 and the second sheet 104 may be made from the same or similar material (e.g., a plastic). Even though both the first sheet 102 and the second sheet 104 are made of the same material and have the same adhesive affinity to the gummy surface 108, it is still possible to separate just one of the sheets.

For example, when attempting to remove the treatment strip 106 having two gummy surfaces 108 from polyethylene sheets (e.g., the first sheet 102 and the second sheet 104), the end-user will usually grab one end of the polyethylene sheet and hold it stationary while applying the peeling force to the other sheet. It is most often the polyethylene sheet receiving the peeling force that peels first, while leaving the other polyethylene sheet intact. In a few cases the polyethylene sheet will begin to peel from the stationary side, in which case the end result will be the same. There are also slight differences introduced in manufacturing that can determine which side of the polyethylene sheet peels first, such as a void or overhang of gummy material that favors or disfavors one side over another. Such nuances could be intentionally designed into the gummy surface, or gel layer if so desired. This example may be incorporated for all packages, and packaging systems described throughout this specification.

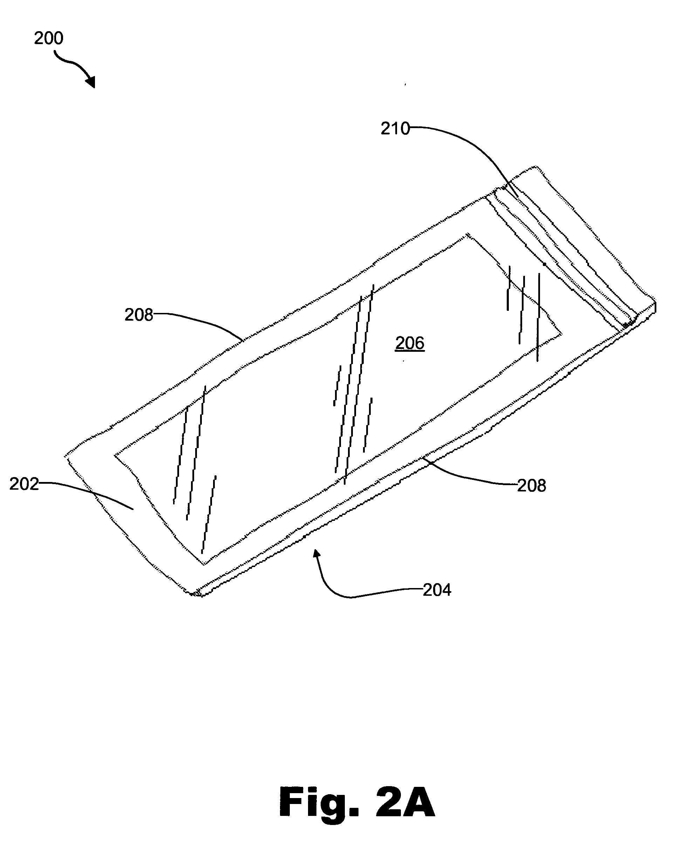

In a similar manner, Figure 2A illustrates another example embodiment of a package 200. Similar to the above discussion with reference to Figures 1A-1B, package 200 may be used to package treatment strip 206. As above, it is noteworthy that treatment strip 206 is not attached to, or does not include, a separate release liner. Rather, it is the material of the package 200 that directly interfaces with the treatment strip 206. Therefore, in one implementation, the treatment strip 206 can have a backing material on one side of the treatment strip206, or alternatively, the treatment strip 206 may not include any backing layer such that each surface of the treatment strip 206 is a gummy surface.

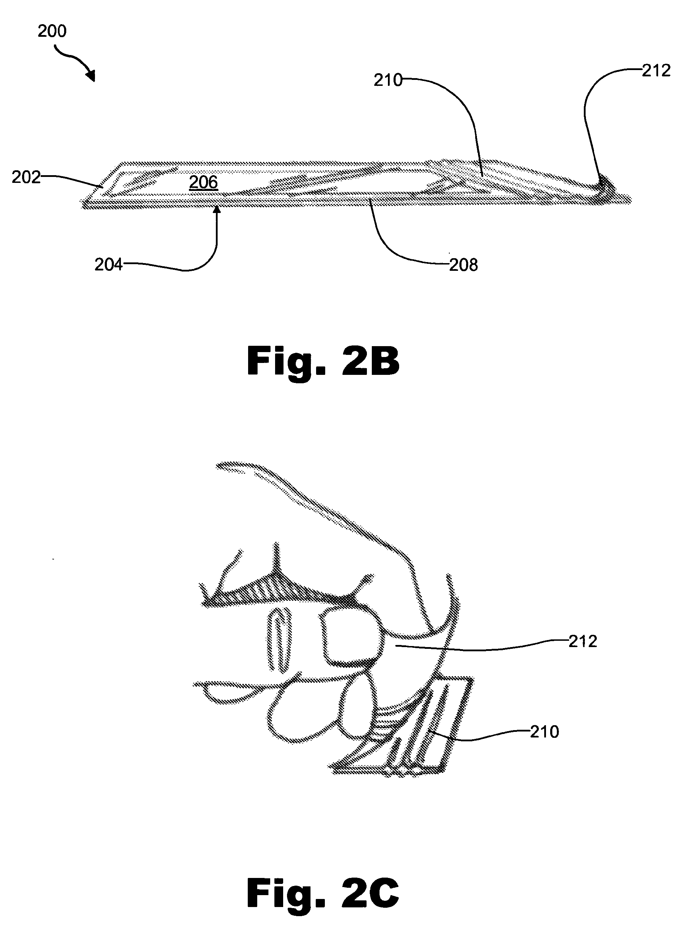

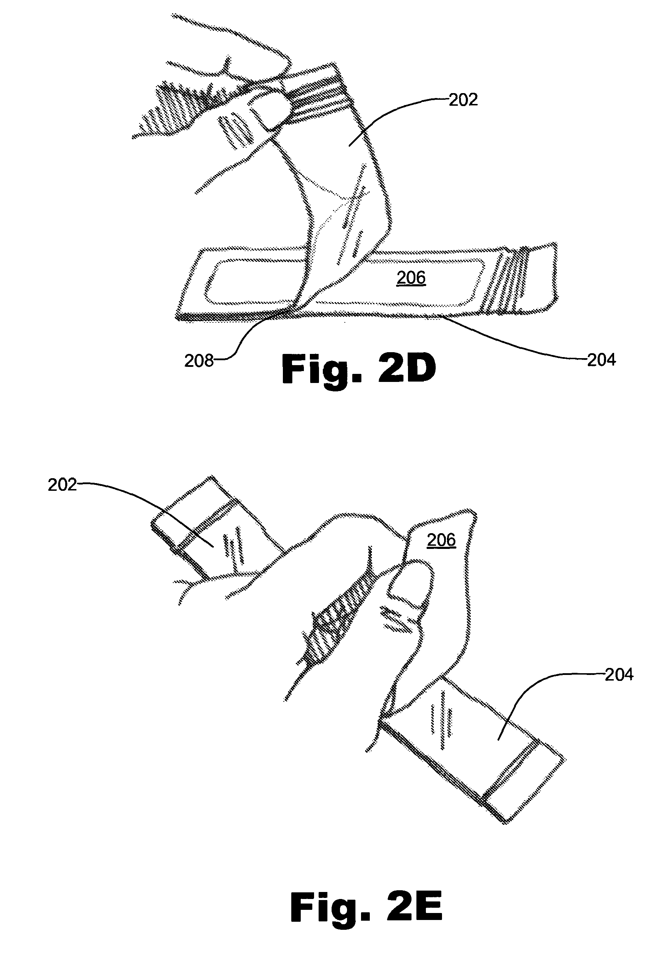

Referring back to Figure 2, packaging 200 includes a plastic bag configuration having a first sheet 202 (e.g., top sheet) and a second sheet (e.g., bottom sheet). The first sheet 102 and the second sheet 104 may include a zip-lock opening 210 that can be sealed. Moreover, the package 200 may include weakened seams 208 running lengthwise along the edges of the package 200.

In one embodiment, the treatment strip 206 is positioned on the second sheet 204 of the package 200 and is removably adhered thereto by the adhesive nature of the gummy surface on the treatment strip 206. The backing material on the opposing side of the treatment strip 206 has little or no adhesion to the first sheet 202 since the only contact between the first sheet 202 and the treatment strip 206 is with the backing material of the treatment strip 206.

Figures 2B through 2E illustrate one way in which an end-user can open the package 200 to gain access to the treatment strip 206. For example, Figure 2B illustrates a side view of the package 200. Figure 2B shows that a corner 212 of the first sheet 202 near the zip-lock opening 210 may be peeled away from the second sheet 204.

As illustrated in Figure 2C, an end-user may start to open the package 200 by grasping the corner 212 and pulling apart the zip-lock opening 210. Upon opening the zip-lock opening 210, the end-user can continue to pull the first sheet 202 away from the second sheet 204 by breaking the weakened seams 208 between the first sheet 202 and the second sheet 204, as illustrated in Figure 2D. Once the first sheet 102 is sufficiently separated from the second sheet 202, the end-user may then grasp the treatment strip 206 and peel the treatment strip 206 off of the second sheet 204, as illustrated in Figure 2E.

In an alternative embodiment, package 200 may include a zip-lock or zipper mechanism on more than one side of the bag. The invention contemplates the use of a zip-lock or zipper that opens one, two, three or four sides of the package 200.

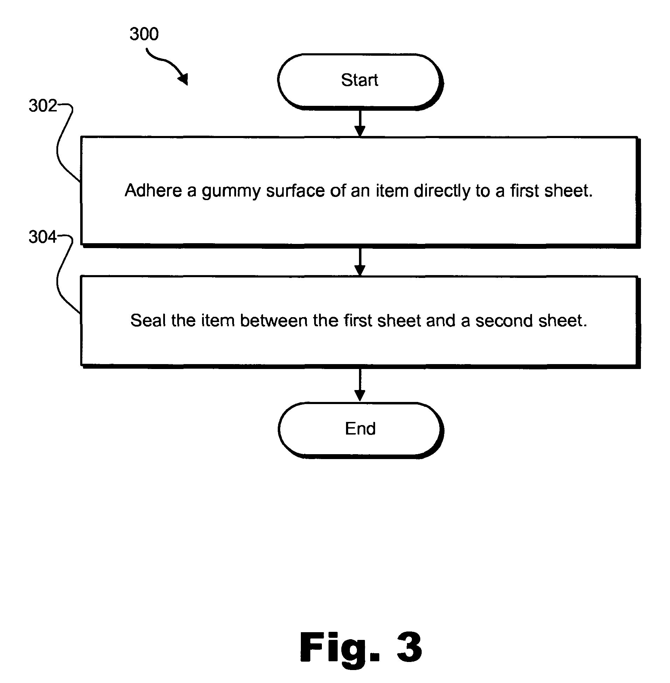

Accordingly, Figures 1A through 2E and the corresponding text provide a number of different components and modules that provide a package used to package an item with at least one gummy surface. In addition to the foregoing, implementations of the present invention can also be described in terms of flowcharts comprising one or more acts in a method for accomplishing a particular result. For example, Figure 3 illustrates a method 300 of packaging an item with at least one gummy surface. The acts of Figure 3 are discussed more fully below with respect to the components discussed with reference to Figures 1A through Figure 2E.

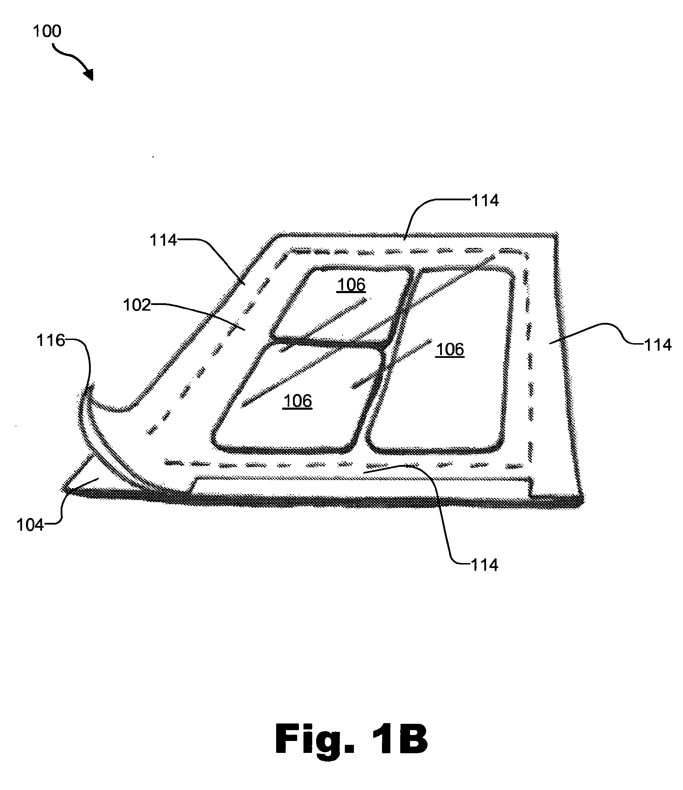

For example, Figure 3 shows that the method 300 comprises an act 302 of adhering a gummy surface of an item directly to a first sheet. For example, Figure 1B shows that the treatment strip 106 can include a gummy surface 108 that adheres to a first sheet 102.

Also, the method 300 comprises an act 304 of sealing the item between the first sheet and a second sheet. For example, Figure 1A and 1B illustrate that treatment strips 106 may be sealed between first sheet 102 and second sheet 104.

Accordingly, the diagrams and figures provided in Figure 1 through Figure 3 illustrate a number of methods, devices, systems, configurations, and components that can be used to effectively package an item having a gummy surface.

The present invention may be embodied in other specific forms without departing from its spirit or essential characteristics. The described implementations are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. A packaging system (200), comprising:
a top sheet (202);
a bottom sheet (204) coupled to the top sheet;
an enclosed space formed between the top sheet and the bottom sheet that environmentally seals a treatment strip (206) with at least one gummy surface (208), wherein the treatment strip only interfaces with the top sheet and bottom sheet and wherein the top sheet is configured to releaseably adhere to the gummy surface on the treatment strip;
the bottom sheet is removably attached to the top sheet; and
the enclosed space is formed between the top sheet and the bottom sheet;
wherein the treatment strip is environmentally sealed within the enclosed space.

2. The packaging system of claim 1, wherein both the top sheet and the bottom sheet are a plastic material.

3. The packaging system of claim 2, further comprising:
a first plastic zipper connector (210) positioned adjacent to a first end of the top sheet; and
a second plastic zipper connector (210) positioned adjacent a first end of the bottom sheet,
wherein the first plastic zipper connector and the second plastic zipper connector couple together to seal the enclosed space.

4. The packaging system of claim 1, further comprising:
a first seam between a first edge of the top sheet and bottom sheet; and
a second seam between a second edge of the top sheet and bottom sheet,
wherein the first edge and the second edge are both perpendicular to the first end of the top sheet and the first end of the bottom sheet.

5. The packaging system of claim 4, wherein the treatment strip comprises an agent to provide a treatment to teeth upon contact.

6. The package recited in claim 1, wherein the top sheet is plastic, and the bottom sheet is a paper product.

7. The package recited in claim 1, wherein the treatment strip further comprises a backing material opposite the gummy surface.

8. The package recited in claim 1, further comprising:
a first weakened seam (208) on a second edge of the enclosed space; and
a second weakened seam (208) on a third edge of the enclosed space,
wherein the second edge and the third edge are substantially perpendicular to the first edge of the enclosed space.

9. The package recited in claim 1, wherein the treatment strip is a dental treatment strip.

10. A method of packaging, comprising:
adhering a gummy surface of a treatment strip (206) directly to a top sheet (202); and
environmentally sealing the treatment strip in an enclosed space formed between the top sheet and a bottom sheet (204) which is removably attached to the top sheet, wherein the treatment strip only interfaces with the top sheet and bottom sheet and both the top sheet and the bottom sheet are a plastic material.

11. The method recited in claim 10, further comprising applying a backing material opposite the gummy surface of the treatment strip.

12. The method recited in claim 10, further comprising adhering a second gummy surface to the another of the top sheet and the bottom sheet.

13. The method recited in claim 10, wherein sealing the treatment strip between the top sheet and the bottom sheet comprises heat-sealing edges of the top sheet to edges of the bottom sheet.

14. The method recited in claim 10, wherein the treatment strip with a gummy surface is a dental treatment strip.

## Patentansprüche

1. Verpackungssystem (200) umfassend:
ein oberes Sheet (202);
ein unteres Sheet (204), welches mit dem oberen Sheet verbunden ist;
einen abgeschlossenen Raum, der zwischen dem oberen Sheet und dem unteren Sheet ausgebildet ist, der einen Behandlungsstreifen (206) mit wenigstens einer klebrigen Oberfläche (208) umgebungsfest versiegelt, wobei der Behandlungsstreifen nur das obere Sheet und das untere Sheet kontaktiert und wobei das obere Sheet konfiguriert ist, um lösbar an der klebrigen Oberfläche des Behandlungsstreifens zu haften;
das untere Sheet lösbar an dem oberen Sheet befestigt ist; und
der abgeschlossene Raum zwischen dem oberen Sheet und dem unteren Sheet gebildet ist;
wobei der Behandlungsstreifen innerhalb des abgeschlossenen Raums umgebungsfest versiegelt ist.

2. Verpackungssystem nach Anspruch 1, wobei sowohl das obere Sheet sowie das untere Sheet ein Kunststoffmaterial sind.

3. Verpackungssystem nach Anspruch 2, ferner umfassend;
einen ersten Kunststoffreißverschlusskonnektor (210), der neben einem ersten Ende des oberen Sheets angeordnet ist;
einen zweiten Kunststoffreißverschlusskonnektor (210), der neben einem ersten Ende des unteren Sheets angeordnet ist;
wobei der erste Kunststoffreißverschlusskonnektor und der zweite Kunststoffreißverschlusskonnektor miteinander koppeln, um den abgeschlossenen Raum zu versiegeln.

4. Verpackungssystem nach Anspruch 1, ferner umfassend:
eine erste Verbindung zwischen einem ersten Rand des oberen Sheets und des unteren Sheets; und
eine zweite Verbindung zwischen einem zweiten Rand des oberen Sheets und des unteren Sheets;
wobei der erste Rand und der zweite Rand senkrecht zu dem ersten Ende des oberen Sheets und dem ersten Ende des unteren Sheets stehen.

5. Verpackungssystem nach Anspruch 4, wobei der Behandlungsstreifen ein Mittel umfasst, um bei Kontakt eine Behandlung von Zähnen bereitzustellen.

6. Verpackung rezitiert in Anspruch 1, wobei das obere Sheet Kunststoff ist und das untere Sheet ein Papierprodukt ist.

7. Verpackung rezitiert in Anspruch 1, wobei der Behandlungsstreifen ferner ein Trägermaterial auf der gegenüberliegenden Seite der klebrigen Oberfläche umfasst.

8. Verpackung rezitiert in Anspruch 1, ferner umfassend:
eine erste geschwächte Verbindung (208) auf einem zweiten Rand des abgeschlossenen Raums; und
eine zweite geschwächte Verbindung (208) auf einem dritten Rand des abgeschlossenen Raums,
wobei der zweite Rand und der dritte Rand im Wesentlichen senkrecht zu dem ersten Rand des abgeschlossenen Raums stehen.

9. Verpackung rezitiert in Anspruch 1, wobei der Behandlungsstreifen ein Zahnbehandlungsstreifen ist.

10. Verpackungsverfahren umfassend:
Aufbringen einer klebrigen Oberfläche eines Behandlungsstreifens (206) unmittelbar auf einem oberen Sheet (202); und
umgebungsfestes Versiegeln des Behandlungsstreifens in einem abgeschlossenen Raum, der zwischen dem oberen Sheet und einem unteren Sheet (204) ausgebildet ist, welches lösbar an dem oberen Sheet befestigt ist, wobei der Behandlungsstreifen nur das obere Sheet und das untere Sheet kontaktiert und wobei das obere Sheet sowie das untere Sheet ein Kunststoffmaterial sind.

11. Verfahren rezitiert in Anspruch 10, ferner umfassend ein Aufbringen eines Trägermaterials auf der gegenüberliegenden Seite der klebrigen Oberfläche des Behandlungsstreifens.

12. Verfahren rezitiert in Anspruch 10, ferner umfassend ein Aufbringen einer zweiten klebrigen Oberfläche auf der anderen des oberen Sheets und auf dem unteren Sheet.

13. Verfahren rezitiert in Anspruch 10, wobei ein Versiegeln des Behandlungsstreifens zwischen dem oberen Sheet und dem unteren Sheet ein Heißversiegeln der Ränder des oberen Sheets an die Ränder des unteren Sheets umfasst.

14. Verfahren rezitiert in Anspruch 10, wobei der Behandlungsstreifen mit einer klebrigen Oberfläche ein Zahnbehandlungsstreifen ist.

## Revendications

1. Système d'emballage (200), comprenant :
une feuille supérieure (202) ;
une feuille inférieure (204) couplée à la feuille supérieure ;
un espace clos formé entre la feuille supérieure et la feuille inférieure qui scelle par rapport à l'environnement une bandelette de traitement (206) avec au moins une surface collante (208), dans lequel la bandelette de traitement s'interface seulement avec la feuille supérieure et la feuille inférieure et dans lequel la feuille supérieure est configurée pour adhérer de façon amovible à la surface collante sur la bandelette de traitement ;
la feuille inférieure est attachée de façon amovible à la feuille supérieure ; et
l'espace clos est formé entre la feuille supérieure et la feuille inférieure ;
dans lequel la bandelette de traitement est scellée par rapport à l'environnement à l'intérieur de l'espace clos.

2. Système d'emballage selon la revendication 1, dans lequel tant la feuille supérieure que la feuille inférieure sont en matière plastique.

3. Système d'emballage selon la revendication 2, comprenant en outre :
un premier connecteur de fermeture à glissière en plastique (210) positionné adjacent à une première extrémité de la feuille supérieure ; et
un second connecteur de fermeture à glissière en plastique (210) positionné adjacent à une première extrémité de la feuille inférieure,
dans lequel le premier connecteur de fermeture à glissière en plastique et le second connecteur de fermeture à glissière en plastique s'accouplent pour sceller l'espace clos.

4. Système d'emballage selon la revendication 1, comprenant en outre :
une première couture entre un premier bord de la feuille supérieure et la feuille inférieure ; et
une seconde couture entre un deuxième bord de la feuille supérieure et la feuille inférieure,
dans lequel le premier bord et le deuxième bord sont tous les deux perpendiculaires à la première extrémité de la feuille supérieure et à la première extrémité de la feuille inférieure.

5. Système d'emballage selon la revendication 4, dans lequel la bandelette de traitement comprend un agent pour fournir un traitement aux dents lors du contact.

6. Emballage selon la revendication 1, dans lequel la feuille supérieure est en plastique et la feuille inférieure est un produit en papier.

7. Emballage selon la revendication 1, dans lequel la bandelette de traitement comprend en outre une matière de support opposée à la surface collante.

8. Emballage selon la revendication 1, comprenant en outre :
une première couture affaiblie (208) sur un deuxième bord de l'espace clos ; et
une seconde couture affaiblie (208) sur un troisième bord de l'espace clos,
dans lequel le deuxième bord et le troisième bord sont sensiblement perpendiculaires au premier bord de l'espace clos.

9. Emballage selon la revendication 1, dans lequel la bandelette de traitement est une bandelette de traitement dentaire.

10. Procédé d'emballage, comprenant :
l'adhésion d'une surface collante d'une bandelette de traitement (206) directement à une feuille supérieure (202) ; et
le scellement par rapport à l'environnement de la bandelette de traitement dans un espace clos formé entre la feuille supérieure et une feuille inférieure (204) qui est attachée de façon amovible à la feuille supérieure, dans lequel la bandelette de traitement s'interface seulement avec la feuille supérieure et la feuille inférieure et tant la feuille supérieure que la feuille inférieure sont en matière plastique.

11. Procédé selon la revendication 10, comprenant en outre l'application d'une matière de support opposée à la surface collante de la bandelette de traitement.

12. Procédé selon la revendication 10, comprenant en outre l'adhésion d'une seconde surface collante à une autre de la feuille supérieure et de la feuille inférieure.

13. Procédé selon la revendication 10, dans lequel le scellement de la bandelette de traitement entre la feuille supérieure et la feuille inférieure comprend le scellement thermique des bords de la feuille supérieure aux bords de la feuille inférieure.

14. Procédé selon la revendication 10, dans lequel la bandelette de traitement avec une surface collante est une bandelette de traitement dentaire.
